(19) **Europäisches Patentamt / European Patent Office / Office européen des brevets**

(11) **EP 3 454 469 B1**

(12) **EUROPEAN PATENT SPECIFICATION**

(45) Date of publication and mention
of the grant of the patent:
**09.03.2022  Bulletin 2022/10**

(21) Application number: **17190631.6**

(22) Date of filing: **12.09.2017**

(51) International Patent Classification (IPC):
***H02P 29/50*** (2016.01)

(52) Cooperative Patent Classification (CPC):
**H02P 29/50;** F05B 2220/7068; H02P 2101/15;
Y02E 10/72

(54) **TORQUE RIPPLE REDUCTION FOR A GENERATOR AND WIND TURBINE INCLUDING THE SAME**

REDUZIERUNG DER DREHMOMENTWELLIGKEIT FÜR EINEN GENERATOR UND WINDTURBINE DAMIT

RÉDUCTION D'ONDULATION DE COUPLE POUR UN GÉNÉRATEUR ET ÉOLIENNE LA COMPORTANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.03.2019  Bulletin 2019/11**

(73) Proprietor: **Siemens Gamesa Renewable Energy
A/S
7330 Brande (DK)**

(72) Inventor: **Xie, Ge
7100 Vejle (DK)**

(74) Representative: **Aspacher, Karl-Georg
Siemens Gamesa Renewable Energy GmbH & Co.
KG
Otto-Hahn-Ring 6
81739 München (DE)**

(56) References cited:
**US-B1- 9 160 260**

• **"METHOD FOR DETERMINING THE ANGULAR POSITION OF A WIND TURBINE ROTOR", IP.COM JOURNAL, IP.COM INC., WEST HENRIETTA, NY, US, 22 April 2013 (2013-04-22), XP013156899, ISSN: 1533-0001**
• **JAE-WOO JUNG ET AL: "Experimental Verification and Effects of Step Skewed Rotor Type IPMSM on Vibration and Noise", IEEE TRANSACTIONS ON MAGNETICS, IEEE SERVICE CENTER, NEW YORK, NY, US, vol. 47, no. 10, 1 October 2011 (2011-10-01), pages 3661-3664, XP011383598, ISSN: 0018-9464, DOI: 10.1109/TMAG.2011.2150739**

EP 3 454 469 B1

**Description**

Field of invention

The present invention relates to a method and to an arrangement for controlling a generator to reduce a harmonic torque ripple. Further, the invention relates to a wind turbine comprising a generator and the arrangement for controlling the generator to reduce a harmonic torque ripple.

Art Background

A wind turbine may comprise a rotor shaft with blades connected thereto and may comprise a generator, in particular a high power permanent magnet synchronous machine having a generator rotor which is mechanically connected to the rotor shaft.

The document US 9,160,260 B1 discloses an adaptive actuator control system for acoustic quieting and reduction of vibration of an electromechanical actuator by using closed loop control techniques using vibration feedback from an electromechanical actuator mounted sensor to modify the current command in the motor drive electronics to minimize the resultant motor torque ripple.

Conventionally, torque ripple control may be a big challenge for a high power permanent magnet synchronous machine. The torque of the machine cannot be measured or estimated precisely, which applies in particular to harmonics of the torque. Therefore, conventionally, the torque ripple itself, e.g. higher harmonics of the torque, cannot be used as a feedback in a controller.

Conventionally, one approach to minimize the torque ripple may be to inject a corresponding frequency harmonic current on the q-axis, and force the d-axis harmonic current to be zero at the meantime. Current injection may for example be achieved by appropriately controlling a converter having high power input terminals connected with high power output terminals of the generator, in particular permanent magnet synchronous machine. For example, for minimizing the 6f (six times the fundamental frequency of the electrical machine) torque ripple, a 6f harmonic current may be injected on the q-axis as a reference and the 6f harmonic d-axis current may be set to zero. Further, the 6f $I_q$ may be controlled as the reference by a PI controller. However, in this approach, the amplitude and the phase angle of the reference harmonic current may change due to different operating conditions. Therefore, the fixed parameters are not reliable for the long-term operating torque ripple controller according to the conventional art.

Another conventional approach to control the torque ripple may be using a measurement signal (for example strain gauge or microphone) as the feedback signal. The strain gauge can provide a reliable feedback but the accuracy for the harmonic components may not be good enough. The microphone measured signal may contain a big delay which the normal controller may not be able to handle.

Conventionally, the torque ripple caused by the permanent magnet on a direct drive wind generator may bring a big vibration and noise. According to the international standard IEC 61400-11, turbine noise may need to be measured at standard IEC position. However, finding an accurate and reliable feedback to represent the IEC position noise has always been a trouble for the closed-loop torque ripple and noise control.

The torque ripple may be conventionally minimized by injecting a corresponding frequency harmonic current on the dq reference frame. Using the fixed opening loop harmonic current frequency may be a simple solution, but the needed reference may change due to the different generator operating conditions.

EP 2 552 013 A1 discloses the reduction of noise and vibration of an electromechanical transducer by using a modified stator coil drive signal comprising harmonic components.

Thus, there may be a need for a method and arrangement for controlling a generator to reduce a harmonic torque ripple, wherein at least some of the disadvantages of the prior art are reduced or even overcome. In particular, there may be a need for a method and arrangement of controlling a generator to reduce a harmonic torque ripple, which works reliably under different operating conditions of the generator.

Summary of the Invention

This need may be met by the subject matter according to the independent claims. Advantageous embodiments of the present invention are described by the dependent claims.

According to the present invention it is provided a method of controlling a generator to reduce a harmonic torque ripple according to claim 1, the method comprising: measuring a first value of an acceleration using a first accelerometer mounted at a first position of the generator; measuring a second value of an acceleration using a second accelerometer mounted at a second position of the generator; deriving a vibration signal based on a combination of the first value and the second value of the acceleration; deriving, based on the vibration signal, an amplitude and a phase of a reference harmonic current; injecting a current into the generator based on the reference harmonic current. The method may be implemented in hardware and/or software and may in particular be performed by a wind turbine controller or in general a generator controller. The generator may in particular be or comprise a permanent magnet synchronous machine, in which plural permanent magnets are attached to a rotor which rotates relative to a stator, the stator having at least one set of stator windings, for example one or more sets of three-phase stator windings. The generator may be comprised in a wind turbine.

The first accelerometer and the second accelerometer may measure the acceleration (in one, two or even three different directions) of portions of the generator. The first value of the acceleration and the second value of the acceleration may represent measurements of a mechanical vibration or oscillation of portions of the generator. The first position may be different from the second position, such as arranged at different axial faces or ends of the generator. The vibration signal may comprise one or more higher harmonics of a fundamental electric frequency of the generator, the fundamental frequency being in particular related to a frequency of revolutions of a generator rotor rotating relative to a fixed stator. For deriving the vibration signal, the first value of the acceleration measured by the first accelerometer may be combined with the second value of the acceleration measured by the second accelerometer. The combination may for example comprise to form a sum or an average of the first value and the second value. The vibration signal itself may be represented by an optical and/or electrical signal.

The amplitude and the phase of a reference harmonic current (in particular representing a current to be injected in order to reduce a particular harmonic of the torque ripple) may be derived in dependence and/or associated with the value of the operating point. The reference harmonic current may be described as a trigonometric function, for example a sine function or a cosine function having as argument a particular harmonic of the fundamental frequency of the generator and further having a phase. In particular, the argument of the trigonometric function may be a sum of a particular harmonic (such as 2, 4, 6 or even higher) times the electrical angle of the generator added by the phase value. The trigonometric function may be multiplied by the amplitude as derived according to embodiments of the present invention, for defining the reference harmonic current.

One or more harmonic torque ripples or one or more harmonics of torque ripples may be reduced according to embodiments of the present invention. For each harmonic of the torque ripple to be reduced, a respective reference harmonic current may be associated and finally also injected into the generator. In particular, when one or more harmonics of the torque ripple are desired to be reduced, a current may be injected into the generator based on one or more reference harmonic currents (which may in particular be derived independently and added together). Since embodiments of the present invention take into account the operating region or operating point, the generator is operating in, the reduction of harmonic torque ripples may be improved.

The current which is injected may not only be determined based on the reference harmonic current but may further be determined based on other reference values, such as a reference fundamental current.

The injecting the current may be performed by appropriately controlling for example a converter of the generator, wherein converter power input terminals may be connected to power output terminals of the generator.

The converter may in particular comprise or be an AC-DC-AC converter which may be adapted to convert a variable frequency power stream (e.g. output from the generator) to a fixed frequency power stream. The converter may in particular comprise a number of high power switches, such as IGBTs or any other suitable transistors, which may be driven by gate driver circuits.

According to an embodiment of the present invention, the vibration signal is based on a sum of the first value and the second value of the acceleration. Due to the construction and geometry of the generator, the accelerations measured at different positions or the vibrations of components of the generator at different positions may be different. By taking into account vibration signals or acceleration measurements performed at different locations of the generator, the reference harmonic current may be determined in a more accurate manner.

According to an embodiment of the present invention, the first value of an acceleration and the second value of an acceleration relate to an acceleration in a circumferential direction of the generator. The torque of the driving rotor shaft may act in the circumferential direction. Thus, taking the acceleration in the circumferential direction may effectively be used to determine torque ripple of the generator. The circumferential direction is perpendicular to a radial direction and also perpendicular to an axial direction of the generator. The rotation axis of the rotor is parallel to the axial direction.

According to an embodiment of the present invention, the first position and the second position have essentially a same radial position and essentially a same circumferential position, but different axial positions, in particular being mirror symmetrically arranged.

When the first and the second accelerometer are essentially arranged at a same radial position and also same circumferential position, the measured first value and the measured second value of the acceleration may be advantageously combined to derive the vibration signal. The mirror plane may be a (imaginary) plane at the axial center of the generator which is perpendicular to the axial direction.

According to an embodiment of the present invention, the first accelerometer is mounted at a first stator plate and the second accelerometer is mounted at a second stator plate, the stator plates delimiting the stator towards the environment, and in particular being essentially annular flat plates.

The first stator plate may cover the generator from a first axial side and the second stator plate may cover the generator at a second axial phase and may be axially space apart from the first stator plate. Coils or windings of the stator may be comprised within a space between the first stator plate and the second stator plate. The accelerometers may be mounted at the stator plates at axial faces which are accessible from inside. Thereby, the first accelerometer and the second accelerometer may advantageously measure the acceleration at different positions which may then be taken into account to derive a reference harmonic current which is suitable for reducing the particular harmonic torque ripple.

According to the present invention, the generator comprises a rotor having permanent magnets mounted thereon arranged in at least two, in particular between 5 and 20, rings in different axial positions being skewed relative to each other in the circumferential direction.

When the different adjacent permanent magnet rings are skewed relative to each other in the circumferential direction, the cogging torque may advantageously be reduced. This construction of the permanent magnet may also be referred to as a rotor-skewing design. In particular, for this rotor-skewing design it may be expected that the accelerations measured at different positions of the generator may be slightly different. In particular for this rotor skewing design, it may be advantageous to measure at least two values of the accelerations at two different positions.

According to other embodiments of the present invention, more than two accelerometers measuring more than two values of the acceleration are provided. In particular, a plurality of acceleration values measured at different positions of the generator may be combined, such as summed or averaged, in order to derive a vibration signal, based on which then the reference harmonic current is derived. Thereby, the control method may further be improved.

According to an embodiment of the present invention, the method further comprises determining a value of an operating point of the generator; deriving, based on the vibration signal and the value of the operating point, the amplitude and the phase of the reference harmonic current. The operating point may define in which operational state the turbine is. Depending on the operational state of the turbine, the reference harmonic current may change. Thereby, also taking into account the operational state of the turbine to derive the reference harmonic current, still also based on the vibration signal, may improve the control method.

According to an embodiment of the present invention, the value of the operating point is determined based on a, in particular measured fundamental torque and a, in particular measured, rotational speed of the generator. The fundamental torque and the rotational speed of the generator (the rotational speed also referred to as frequency of the generator) may be appropriate operating parameters to define the working point or the working range the generator is operating in. In particular, depending on the thus defined working point or working range, the amplitude and the phase of the reference harmonic current may vary. Thus, it is reasonable and effective, to derive amplitude and phase of the reference harmonic current in dependence of the working range or working point the generator is operating in.

The operating point may define an operating condition of the generator, in particular in terms of one or more operating parameters. In particular, two operating parameters, such as the fundamental torque generated by the generator and the electrical frequency (also referred to as fundamental frequency) of the generator may be appropriate operating parameters to characterize the operating point. It is also possible to use other operating parameters to define operating points, for example, turbine power, generator power, rotor speed and generator mechanical frequency etc. Embodiments of the present invention may define one or more operating regions or ranges, for example a region in a two-dimensional (or higher-dimensional) coordinate system in which two or more operating parameters are indicated on the axis of the coordinate system. A particular operating region may be defined as the two-dimensional or higher-dimensional range for which one or more operating parameters deviate less from one or more center values by a predetermined deviation. Thereby, it becomes possible to control the generator regarding reduction of a harmonic torque ripple in dependence of the operating point or operating region the generator is operating in. Thereby, the harmonic torque ripple reduction may be more effective, thereby in turn improving the performance of the generator and further reducing wear and damage of components of the converter.

The method may in particular be performed repeatedly over time. Thereby, the mechanic vibration may be (for example continuously or in a sampled manner) measured and also the operating point the generator is operating in may be continuously or in a sampled manner determined. In turn, the amplitude and phase may repeatedly be derived based on the respective vibration signal measured in the respective time and the value of the operating at the corresponding time. Further, continuously or repeatedly or in a sampled manner, a current may be derived which is based on the reference harmonic current and the current may be injected into the generator.

According to an embodiment of the present invention, deriving the amplitude and the phase of the reference harmonic current comprises filtering the vibration signal thereby reducing components of the vibration signal other than a particular harmonic (of interest to be reduced) to obtain a filtered vibration signal, in particular time averaging the RMS value of filtered vibration signal, looking up an initial amplitude and an initial phase associated with the value of the operating point from a storage, performing an optimization of the amplitude and phase based on the initial amplitude and the initial phase so that the vibration signal is reduced, in particular minimized, and storing, associated with the value of the operating point, the optimized amplitude and optimized phase in a storage.

The vibration signal may comprise plural frequency components, such as a component of a fundamental frequency and one or more harmonics of the fundamental frequency. The filtering (using an analogue and/or digital filter) the vibration signal may be performed to reduce non-interesting frequency components, but to pass through at least one frequency component which is desired to be reduced in the torque ripple.

The filtered vibration signal is AC signal. RMS value of the AC signal may be used instead of the AC signal itself. The optional time averaging may further reduce noise in the filtered vibration signal.

A look-up table of the initial amplitude and initial phase (associated or corresponding to the particular working point) may be provided or may be accessible in an electronic storage. The initial values for amplitude and phase may have been determined previously, for example by performing controller tuning involving simulations and/or experimental tests. However, the initial amplitude and initial phase may not properly reflect the correct value for the reference harmonic current to be injected to reduce the torque ripple, but other values may be more effective for reducing the harmonic torque ripple. Therefore, starting from these initial values, an optimization is performed, wherein amplitude and/or phase is varied with the aim of reducing the mechanic vibration of one or more desired harmonics, as is reflected by the vibration signal which may represent a feedback during the optimization. The optimized amplitude and phase are then also stored, for example in an electronic storage, for future use and also for the use to derive the current based on the reference harmonic current which may then finally be injected into the generator.

According to an embodiment of the present invention, injecting the current into the generator comprises determining a reference harmonic voltage based on the reference harmonic current and an actual current in at least one stator winding, each the reference harmonic current and the actual current in particular represented by components in a dq-coordinate system, forming a sum of the reference harmonic voltage and a reference fundamental voltage, and supplying the sum as reference voltage to a control input of a converter having power input terminals connected to power output terminals of the generator.

The reference harmonic voltage may represent a voltage reference to be supplied to a converter which may be effective for reducing the harmonic torque ripple of the particular harmonics. From the voltage reference the converter may derive pulse width modulation signals which may control conducting states of the power switches, thereby achieving to generate an output voltage at converter power output terminals corresponding (or being at least substantially equal) to the voltage reference.

The reference fundamental voltage may represent a desired voltage at the fundamental frequency to be output by the generator, without considering any high harmonics of the output voltage. When both the reference fundamental voltage and the reference harmonic voltage are summed and supplied to a driver or to a converter, the converter may switch its power switches such as to both, achieve the fundamental voltage close to the reference fundamental voltage and also inject a harmonic current such that the harmonic voltage is close to the reference harmonic voltage, thereby reducing torque ripples.

According to an embodiment of the present invention, the method may further comprise determining the reference fundamental voltage based on the actual current in the at least one stator winding of the generator and a reference fundamental current.

The reference fundamental current may be received from a park controller or wind park controller or from a provider or operator of the utility grid the generator is (e.g. via the converter) connected to.

According to the present invention it is provided a wind turbine, comprising: a shaft with rotor blades connected thereto; a generator mechanically coupled with the shaft, wherein the generator comprises a rotor having permanent magnets mounted thereon arranged in at least two rings in different axial positions being skewed relative to each other in the circumferential direction; and an arrangement for controlling the generator to reduce a harmonic torque ripple, the arrangement comprising: a first accelerometer mounted at a first position of the generator and adapted to measure a first value of an acceleration; a second accelerometer mounted at a second position of the generator and adapted to measure a second value of an acceleration; a processor adapted: to derive a vibration signal based on a combination of the first value and the second value of the acceleration, and to derive, based on the vibration signal, an amplitude and a phase of a reference harmonic current; and a driver adapted to inject a current into the generator based on the reference harmonic current.

According to an embodiment of the present invention the driver in particular configured as a converter is controlled based on the reference harmonic current.

The driver may in particular be configured as an AC-DC-AC converter.

Embodiments of the present invention are now described with reference to the accompanying drawings. The invention is not restricted to the illustrated or described embodiments.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Fig. 1 schematically illustrates a wind turbine according to an embodiment of the present invention including an arrangement for controlling a generator according to an embodiment of the present invention;

Fig. 2 schematically illustrates an arrangement for controlling a generator according to an embodiment of the present invention;

Fig. 3 schematically illustrates a generator as may be comprised in the wind turbine illustrated in Fig. 1 according to an embodiment of the present invention;

Fig. 4 schematically illustrates another generator which may be comprised in a wind turbine according to an embodiment of the present invention;

Figs. 5 to 8 illustrate graphs for illustrating embodiments of a control method;

Figs. 9 to 12 illustrate graphs for explaining embodiments of the present invention.

Detailed Description

The illustration in the drawings is in schematic form. It is noted that in different figures, similar or identical elements are provided with the same reference signs or with reference signs, which are different from the corresponding reference signs only within the first digit.

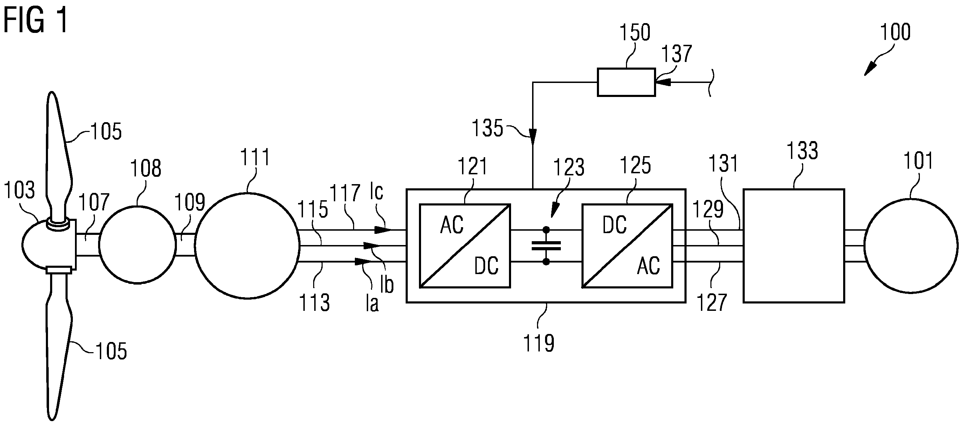

**Fig. 1** illustrates in a schematic form a wind turbine 100 which provides electric energy to a utility grid 101. The wind turbine comprises a hub 103 to which plural rotor blades 105 are connected. The hub is mechanically connected to a main shaft 107 whose rotation is transformed by an optional gear box 108 to a rotation of a secondary shaft 109, wherein the gear box 108 may be optional in which case the wind turbine may be a direct drive wind turbine. The main shaft 107 or the secondary shaft 109 drives a generator 111 which may be in particular a synchronous permanent magnet generator providing a power stream in the three phases or windings 113, 115 and 117 to a converter 119 which comprises a AC-DC portion 121, a DC-link 123 and a DC-AC portion 125 for transforming a variable AC power stream to a fixed frequency AC power stream which is provided in three phases or windings 127, 129, 131 to a wind turbine transformer 133 which transforms the output voltage to a higher voltage for transmission to the utility grid 101.

The converter 119 is controlled via a converter command 135 (Vdref, Vqref) which is derived and supplied from a control arrangement 150 according to an embodiment of the present invention, which receives at least one input signal 137, such as including at least a vibration signal and optionally including stator winding currents and/or one or more reference values and/or one or more quantities indicative of the operation of the generator 111 or any component of the wind turbine 100.

The generator in Fig. 1 comprises a single three-phase stator winding or multiple three-phase stator windings. Thereby, the winding 113 carries the stator current $I_a$, the winding 115 carries the stator current $I_b$ and the winding 117 carries the stator current $I_c$. The control arrangement 150 controls the converter 119.

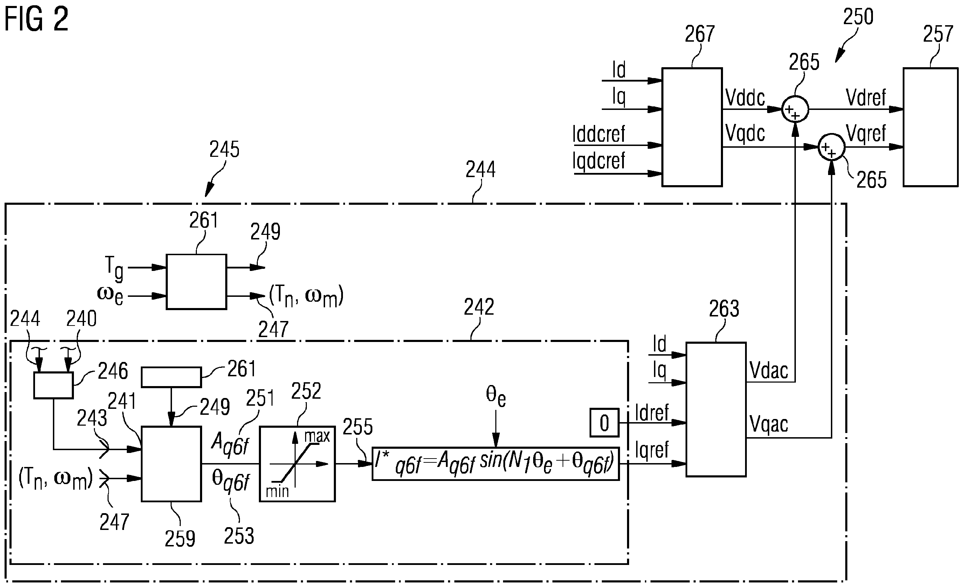

**Fig. 2** schematically illustrates an arrangement 250 for controlling a generator, for example the generator 111 as illustrated in Fig. 1, to reduce a harmonic torque ripple according to an embodiment of the present invention.

The arrangement 250 illustrated in Fig. 2 comprises an input port 241 for receiving a vibration signal 243 indicating a measured mechanic vibration of the generator, for example generator 111 illustrated in Fig. 1.

Furthermore, the arrangement 250 comprises a processor 245 which is adapted to determine a value 247 of an operating point of the generator, for example represented by the two values ($T_n$, $\omega_m$), one of a plurality of predetermined fundamental torques and one of a plurality of predetermined rotational speeds of the generator.

The processor 245 is further adapted to derive, based on the vibration signal 243 and optionally also based on the value 247 of the operating point, an amplitude 251 (e.g. $A_{q6f}$ for a 6th harmonic of the basic or fundamental frequency f) and a phase 253 (for example $\Theta_{q6f}$, for the 6th harmonic of the fundamental frequency) of a reference harmonic current (for example $I_{q6f}$ for a reference current of a 6th harmonic), wherein the harmonic current is also indicated by reference sign 255.

Further, the arrangement 250 comprises a driver 257 (e.g. configured as converter 119 in Fig. 1) which is adapted to inject a current into the generator based on the reference harmonic current (Iqref), Idref being in particular set to zero.

For performing these functions, the arrangement 250 comprises an auto-tuning controller 259 which receives the vibration signal 243 as well as the value 247 of the load point and further receives an enable signal 249 which is derived by a load point detection module 261 which derives the value of the load point 247 based on the torque $T_g$ of the generator and the electrical frequency $\omega_e$ of the electric generator.

The reference harmonic current is labelled in Fig. 2 also as Iqref, i.e. a harmonic current reference or a q-component of a harmonic current reference.

The arrangement 250 further comprises a harmonic current regulator 263 which receives (e.g. a representation of) the reference harmonic current (Iqref) as well as the d-component Idref of the reference harmonic current which is usually zero. Furthermore, the harmonic current regulator 263 receives the harmonic currents Id, Iq (derived e.g. from Ia, Ib, Ic by Transformation into the dq-system) of at least one set of stator windings of the generator, such as generator 111. The d-component and the q-component of the stator current are for example derived based on the three phase currents Ia, Ib, Ic by performing a park transformation.

The harmonic current regulator 263 comprises circuitry to derive from the input values a reference harmonic voltage Vdac, Vqac, i.e. components in the d/q-coordinate system which are supplied to addition elements 265. Using the addition elements 265, a sum of a reference fundamental voltage Vddc, Vqdc with the reference harmonic voltage Vdac, Vqac is calculated and output as a reference voltage Vdref, Vqref which is supplied to the driver 257, which may for example be configured as a converter.

Fig. 2 shows the torque ripple controller 244 which is used in the direct drive permanent magnet synchronous generator. The harmonic current references on the d- and q-axes are given into the harmonic current regulator for minimizing the torque ripple in the generator. In the harmonic current reference calculation module, the harmonic current reference on the d-axis is e.g. set as 0; the harmonic current reference on the q-axis is given as a harmonic sinusoidal signal, the amplitude and phase angle of this signal are both obtained by the auto tuning controller.

In Fig. 2, the load point detection module 261 will give the enable/disable signal and the load point information (Tn, ωm) to the auto tuning controller. The scheme of load point detection can be expressed as:

$$
\begin{cases} |T - T_1| \le \Delta T \\ |\omega - \omega_1| \le \Delta \omega \end{cases} \rightarrow Enable \, \& \, (T_1, \omega_1)
$$

$$
\begin{cases} |T - T_1| \le \Delta T \\ |\omega - \omega_2| \le \Delta \omega \end{cases} \rightarrow Enable \, \& \, (T_1, \omega_2)
$$

$$
\vdots
$$

$$
\begin{cases} |T - T_1| \le \Delta T \\ |\omega - \omega_m| \le \Delta \omega \end{cases} \rightarrow Enable \, \& \, (T_1, \omega_m)
$$

$$
\vdots
$$

$$
\begin{cases} |T - T_n| \le \Delta T \\ |\omega - \omega_m| \le \Delta \omega \end{cases} \rightarrow Enable \, \& \, (T_n, \omega_m)
$$

The arrangement 250 comprises the harmonic current reference calculation module or processor 242 which harbours the auto-tuning controller 259 and the limitation element 252.

The arrangement 250 further comprises a fundamental current regulator 267 which receives the stator winding currents Id, Iq as well as fundamental current references Iddcref, Iqdcref based on which the fundamental voltage references Vddc, Vqdc are calculated.

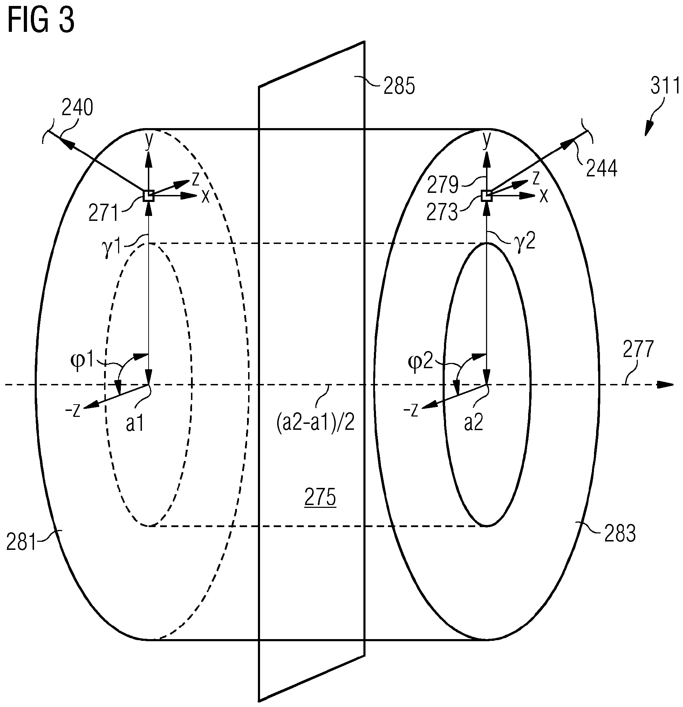

The vibration signal 243 illustrated in Fig. 2 is derived based on a combination (derived by combination module 246) of a first value 240 of an acceleration measurement and a second value 244 of an acceleration measurement. Thereby, the first value 240 is measured by a first accelerometer 271 and the second value 244 of the acceleration is measured by a second accelerometer 273, which are both mounted on a generator, as is schematically illustrated in **Fig. 3.**

Thereby, Fig. 3 schematically illustrates a generator 311 which may be used as a generator 111 in the wind turbine 100 as illustrated in Fig. 1. For ease of illustration, only a stator 275 is illustrated, a not illustrated rotor would rotate around a rotation axis 277 also defining the axial direction. The radial direction 279 (y) is perpendicular to the axial direction (x) and also the circumferential direction (z) is perpendicular to the radial direction (y) and the axial direction (x). The stator 275 comprises a not illustrated stator yoke comprising teeth and slots which are spaced apart in the circumferential direction z. Around the teeth, plural not illustrated conductor windings are arranged.

At axial end faces, the generator 275 is covered with a first stator plate 281 and a second stator plate 283, respectively, which represent end plates of a generator housing. The first accelerometer 271 is fixed and mounted at the first stator plate 281 at a radial position r1 and a circumferential direction φ1, while the second accelerometer 273 is mounted at the second stator plate 283 at a radial position r2 and at a circumferential position (φ2, wherein r1 = r2 and (φ1 = (φ2. However, the two accelerometers 271, 273 are mounted at two different axial positions a1 and a2 which are measured along the axial direction x or 277.

According to this embodiment of the present invention, the acoustic noise signal for some specific harmonics (e.g. 6f, 12f) is represented by using vibration sensors (for example accelerometers) on the generator stator plates 281 and 283. At least two accelerometers 271, 273 are needed and mounted on two stator plates, respectively. The accelerometers need to be mounted on each stator plate 281, 283 in a mirrorsymmetric manner, wherein a mirror plane 285 is perpendicular to the axial direction x or 277 and is arranged in the center (e.g. at (a2-a1)/2) between the stator plates 281 and 283.

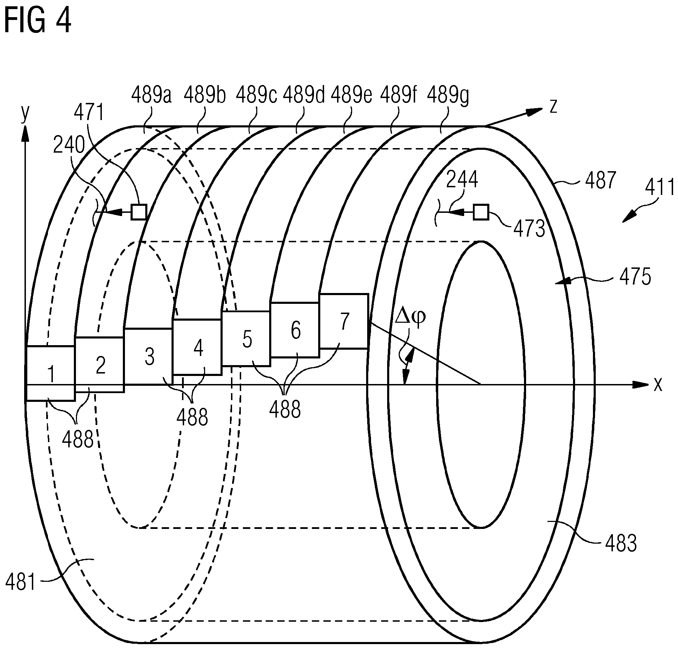

It is in particular useful to employ at least two accelerometers in the case, that a direct drive permanent magnet generator employs a rotor-skewing design, as is exemplary illustrated in **Fig. 4**. Thereby, Fig. 4 illustrates a generator 411 which may be comprised in the wind turbine 100 as illustrated in Fig. 1 wherein additionally to a stator 475, also a rotor 487 is schematically illustrated.

According to the invention, the rotor 487 comprises plural rings 489a, ..., 489g of permanent magnets which are skewed relative to each other in the circumferential direction. While for example the ring 489a (no. 1) is at a circumferential direction φ = 0, the rings 489b, ..., 489g (no. 2, 3, 4, 5, 6 and 7) are skewed relative to the first ring by equal circumferential angle offsets such that ring 489g (no. 7) is offset by an angle Δφ. This rotor skewing design may reduce a cogging torque.

According to the design illustrated in Fig. 4, injection of harmonic current may have a different effect for different permanent magnets, i.e. different rings 489a,...,489g which are skewed relative to each other. For example, when the 6f harmonic stator magnetic field is reducing the torque ripple from the ring 489a (no. 1), it may increase the torque ripple causing by the ring 489g (no. 7) at the same time. Therefore, the torque ripples and vibrations on stator plates 481, 483 will be different. By using the two symmetrically arranged accelerometers 471 and 473 mounted at the first stator plate 481 and the second stator plate 483, respectively, and adding the tangential direction (circumferential direction z) acceleration signals together, an overall torque ripple of the generator may be described. Moreover, this overall torque ripple signal may match the IEC location (international standard IEC61400-11) noise signal.

Embodiments of the present invention may provide an accurate and reliable feedback solution for the wind generator torque ripple and noise control. No turbine individually tuning for the torque ripple controller may be required.

The accelerometer may give a faster and more stable signal response compared to a microphone sound detection signal. The accelerometer signal may be friendlier to the turbine controller.

Two accelerometers in a symmetrical position may describe an overall torque direction vibration which may cause the noise.

Varying torque ripple due to the rotor-skewing design may properly be solved.

IEC position acoustic noise may be monitored in a real-time by using embodiments of the present invention.

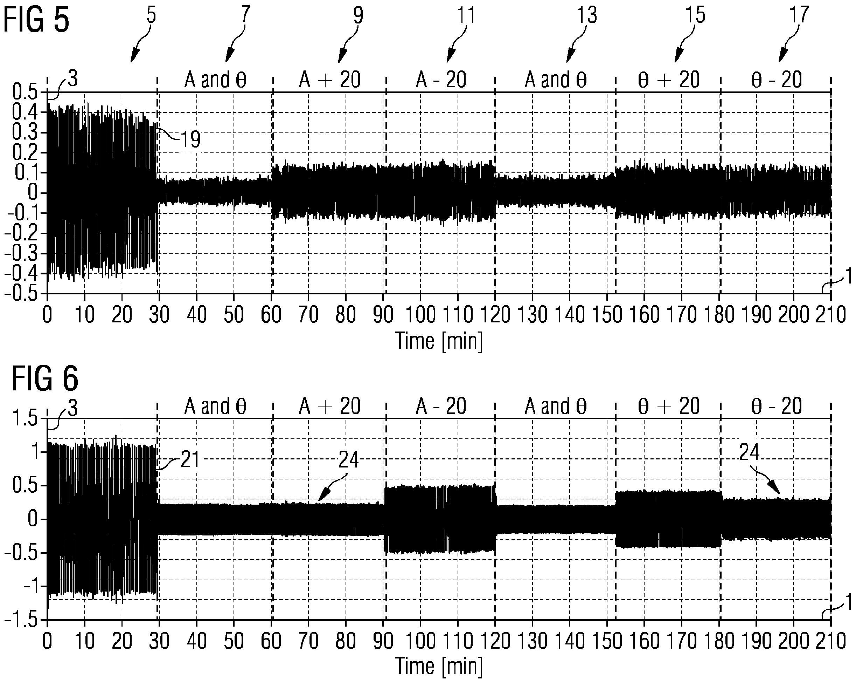

The **Figs. 5 to 8** illustrate graphs in coordinate systems, wherein abscissas 1 denote the time, while the ordinates 3 denote amplitudes of a 6f harmonic vibration and noise (in Fig. 5). Thereby, the first column 5 relates to the case wherein no 6f current injection is performed, the column 7 (A and Θ) relate to the case, where the optimal amplitude and the optimal phase of the 6f current is injected, the column 9 (A + 20) relates to the case, where a 6f current is injected which has the optimal amplitude increased by 20, the column 11 (A - 20) relates to the case, wherein a harmonic current is injected having the optimal amplitude reduced by 20, the column 13 (A and Θ) relates to the case where the optimal amplitude and optimal phase is injected, the column 15 (Θ + 20) relates to the case, where the optimal amplitude but the phase shifted by +20 relative to the optimal phase is injected and the column 17 (Θ - 20) relates to the case, where the current having an optimal amplitude but having a phase which is reduced by 20 relative to the optimal phase is injected.

The trace 19 in Fig. 5 indicates a microphone derived signal for the different cases of harmonic current injection. As can be appreciated from Fig. 5, when the optimal amplitude in an optimum phase is injected (see column 7 (A and Θ)), the resulting vibration is minimal, while the vibration increases when non-optimal values are used for injecting the harmonic current.

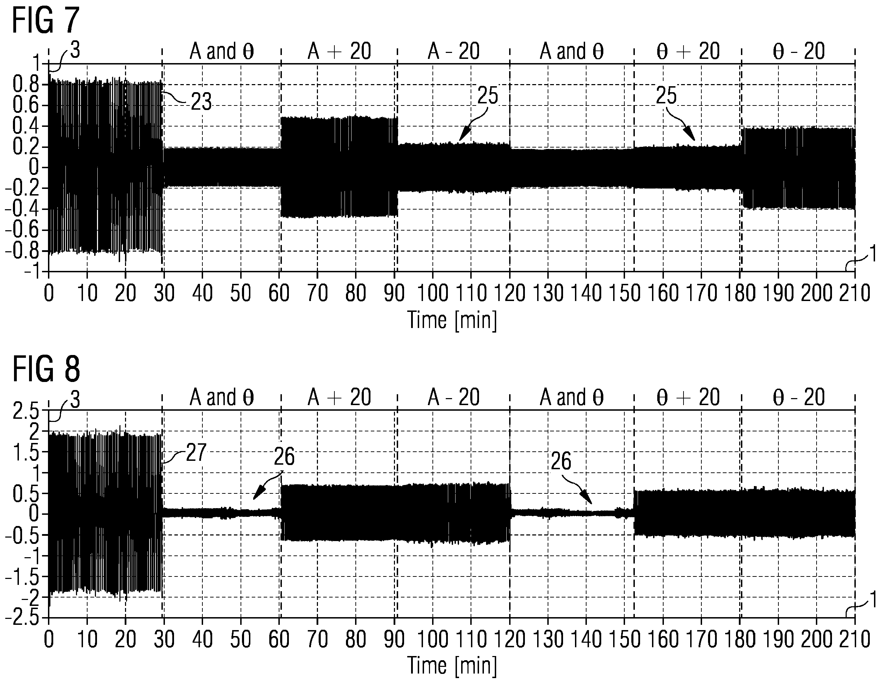

Fig. 6 illustrates the first value 21 of the acceleration as measured by the first accelerometer 271 and Fig. 7 illustrates the second value 23 of the acceleration, as is measured by the second accelerometer 273 (see Fig. 3). As can be seen in Fig. 6, also the non-optimal values defining the harmonic current injection in columns 9 and 17 (indicated by arrow 24) result in a relatively low vibration signal, although not the optimal current injection is performed.

Further, also Fig. 7 shows a relatively low vibration signal, when the non-optimal harmonic current is injected, as is indicated by arrows 25.

Fig. 8 now illustrates the detected vibration, when the first value 21 and the second value 23 are combined to result in a combination value 27 which may be the sum or the average of the first signal 21 and the second signal 23. As can be appreciated from Fig. 8, only for the columns 7 and 13, i.e. the optimal harmonic current injection, the derived vibration signal 27 is minimal, while for the non-optimal harmonic current injection, the vibration signal is considerably larger. Thereby, an effective damping of a particular harmonic or a number of particular harmonics may be achieved, when the harmonic current is calculated based on combination signal 27.

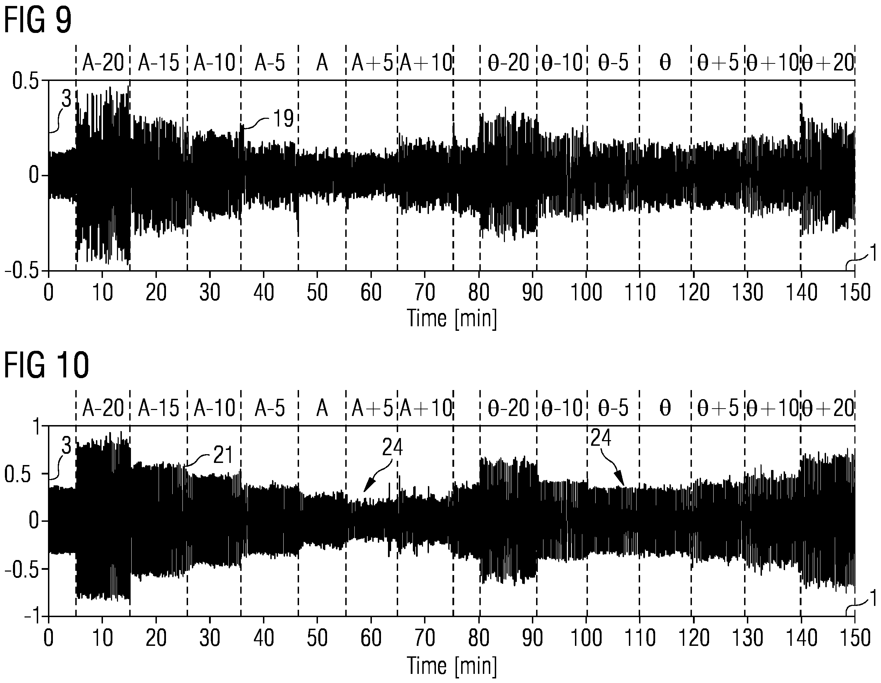

**Figs. 9 to 12** illustrate a further example how the first value 21 and the second value 23 of the measured acceleration can be combined to result in a combined value of vibration signal 27 (for example the sum or the average of the first signal and the second signal 21, 23), for effectively representing the vibration. Thereby, the columns A-X denote injection of a current having an amplitude which is reduced by X relative to the optimal amplitude, the columns A + X represent the vibrations when a harmonic current is injected having an amplitude which is by X larger than the optimal amplitude. Analogous are the denomination of the injection having non-optimal phase Θ.

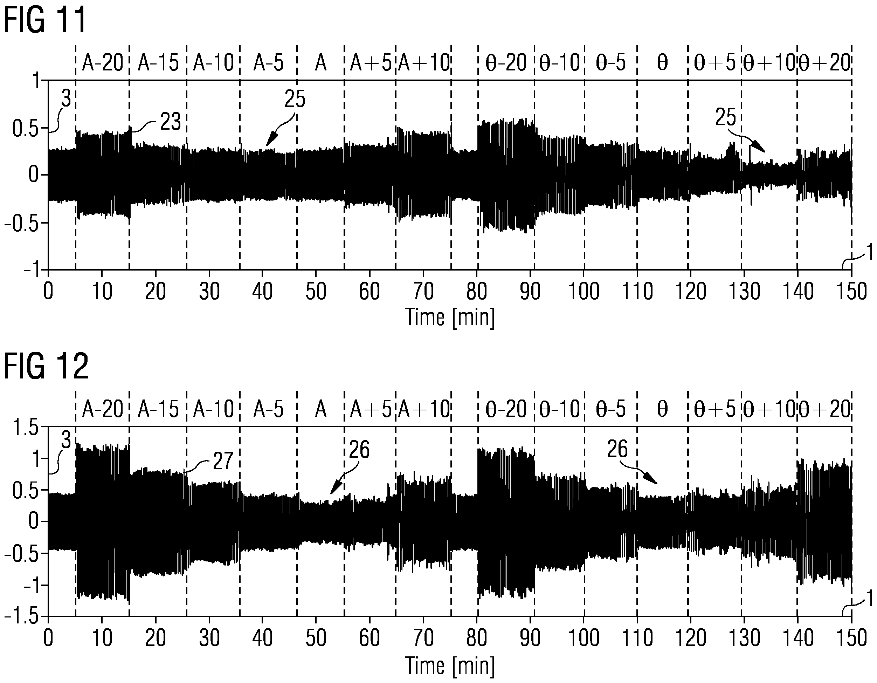

Fig. 9 shows the trace 19 as obtained using a microphone, Fig. 10 shows the trace 21 of the first value of the acceleration, as obtained by the first accelerometer (e.g. 271 or 471 in Fig. 3 and 4, respectively) and Fig. 11 shows the trace 23 of the second value of the acceleration, as obtained by the second accelerometer (e.g. 273 or 473 in Fig. 3 and 4, respectively).

As can be taken from Fig. 12, the vibration signal 27 as derived by the combination of the first value 21 of the acceleration and the second value 23 of the acceleration have the minimum (indicated by an arrow 26) at those columns, which represent injection of the optimal harmonic current.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1. Method of controlling a generator (111) to reduce a harmonic torque ripple, wherein the generator (411) comprises a rotor (487) having permanent magnets (488) mounted thereon arranged in at least two rings (489a, ..., 489g) in different axial positions being skewed relative to each other in the circumferential direction (z), the method comprising:

measuring a first value (240, 21) of an acceleration using a first accelerometer (271, 471) mounted at a first position (a1) of the generator (111);

measuring a second value (244, 23) of an acceleration using a second accelerometer (273, 473) mounted at a second position (a2) of the generator (111);

deriving a vibration signal (243, 27) based on a combination of the first value (240, 21) and the second value (244, 23) of the acceleration;

deriving, based on the vibration signal (243), an amplitude (251) and a phase (253) of a reference harmonic current (Iqref);

injecting a current into the generator (111) based on the reference harmonic current (Iqref).

2. Method according to the preceding claim, wherein the vibration signal (243, 27) is based on a sum of the first value (240, 21) and the second value (244, 23) of the acceleration.

3. Method according to one of the preceding claims, wherein the first value (240, 21) of the acceleration and the second value (244, 23) of the acceleration relate to an acceleration in a circumferential direction (z) of the generator (111, 311, 411).

4. Method according to one of the preceding claims, wherein the first position and the second position have essentially a same radial position (r1, r2) and essentially a same circumferential position (01, 02), but different axial positions (a1, a2), in particular being mirror symmetrically arranged.

5. Method according to one of the preceding claims, wherein the first accelerometer (271) is mounted at a first stator plate (281) and the second accelerometer (273) is mounted at a second stator plate (283), the stator plates delimiting the stator towards the environment, and in particular being essentially annular flat plates.

6. Method according to one of the preceding claims, further comprising:

determining a value (247) of an operating point of the generator (111);

deriving, based on the vibration signal (243) and the value (247) of the operating point, the amplitude (251) and the phase (253) of the reference harmonic current (Iqref);

7. Method according to the preceding claim, wherein the value (247) of the operating point is determined based on a, in particular measured, fundamental torque (Tg) and a, in particular measured, rotational speed (ωe) of the generator.

8. Method according to one of the preceding claims, wherein deriving the amplitude and the phase of the reference harmonic current comprises:

filtering the vibration signal (343) thereby reducing components of the vibration signal other than a particular harmonic to obtain a filtered vibration signal (371);

looking up an initial amplitude and an initial phase associated with the value of the operating point from a storage;

performing an optimization of the amplitude and phase based on the initial amplitude and the initial phase so that the vibration signal is reduced, in particular minimized; and

storing, associated with the value of the operating point, the optimized amplitude and optimized phase in a storage.

9. Method according to one of the preceding claims, wherein injecting the current into the generator comprises:

determining a reference harmonic voltage (Vdac, Vqac) based on the reference harmonic current (Iqref, Idref) and an actual current (Id, Iq) in at least one stator winding, each the reference harmonic current and the actual current in particular being represented by components in a dq-coordinate system,

forming a sum (Vdref, Vqref) of the reference harmonic voltage and a reference fundamental voltage; and

supplying the sum as reference voltage to a control input of a converter (119) having power input terminals connected to power output terminals of the generator (111).

10. Method according to the preceding claim, further comprising:
determining the reference fundamental voltage (Vddc, Vqdc) based on the actual current (Id, Iq) in at least one stator winding of the generator and a reference fundamental current (Iddcref, Iqdcref).

11. Wind turbine (100), comprising:

a shaft (107) with rotor blades (105) connected thereto;

a generator (111) mechanically coupled with the shaft, wherein the generator (411) comprises a rotor (487) having permanent magnets (488) mounted thereon arranged in at least two rings (489a, ..., 489g) in different axial positions being skewed relative to each other in the circumferential direction (z); and

an arrangement (150, 250) for controlling the generator (111) to reduce a harmonic torque ripple, the arrangement comprising:

a first accelerometer (271) mounted at a first position (a1) of the generator (311) and adapted to measure a first value (21, 240) of an acceleration;

a second accelerometer (273) mounted at a second position (a2) of the generator (311) and adapted to measure a second value (23, 244) of an acceleration;

a processor (242) adapted:

to derive a vibration signal (243) based on a combination of the first value (240) and the second value (244) of the acceleration, and

to derive, based on the vibration signal (243), an amplitude (251) and a phase (253) of a reference harmonic current (Iqref); and

a driver (257) adapted to inject a current into the generator (111) based on the reference harmonic current (Iqref).

**12.** Wind turbine (100) according to the preceding claim, wherein the driver is configured as a converter that is controlled based on the reference harmonic current.

## Patentansprüche

**1.** Verfahren zum Steuern eines Generators (111), um eine harmonische Drehmomentwelligkeit zu reduzieren, wobei der Generator (411) einen Rotor (487) umfasst, der Permanentmagnete (488) aufweist, die daran in mindestens zwei Ringen (489a, ..., 489g) in unterschiedlichen axialen Positionen angeordnet montiert sind, die relativ zueinander in der Umfangsrichtung (z) versetzt sind, wobei das Verfahren umfasst:

Messen eines ersten Werts (240, 21) einer Beschleunigung unter Verwendung eines ersten Beschleunigungsmessers (271, 471), der an einer ersten Position (a1) des Generators (111) montiert ist;

Messen eines zweiten Werts (244, 23) einer Beschleunigung unter Verwendung eines zweiten Beschleunigungsmessers (273, 473), der an einer zweiten Position (a2) des Generators (111) montiert ist;

Ableiten eines Schwingungssignals (243, 27) basierend auf einer Kombination des ersten Werts (240, 21) und des zweiten Werts (244, 23) der Beschleunigung;

Ableiten, basierend auf dem Schwingungssignal (243), einer Amplitude (251) und einer Phase (253) eines harmonischen Bezugsstroms (Iqref);

Injizieren eines Stroms in den Generator (111) basierend auf dem harmonischen Bezugsstrom (Iqref).

**2.** Verfahren nach dem vorhergehenden Anspruch, wobei das Schwingungssignal (243, 27) auf einer Summe des ersten Werts (240, 21) und des zweiten Werts (244, 23) der Beschleunigung basiert.

**3.** Verfahren nach einem der vorhergehenden Ansprüche, wobei sich der erste Wert (240, 21) der Beschleunigung und der zweite Wert (244, 23) der Beschleunigung auf eine Beschleunigung in einer Umfangsrichtung (z) des Generators (111, 311, 411) beziehen.

**4.** Verfahren nach einem der vorhergehenden Ansprüche, wobei die erste Position und die zweite Position im Wesentlichen eine gleiche radiale Position (r1, r2) und im Wesentlichen eine gleiche Umfangsposition (91, θ2), jedoch unterschiedliche axiale Positionen (a1, a2) aufweisen, insbesondere spiegelsymmetrisch angeordnet sind.

**5.** Verfahren nach einem der vorhergehenden Ansprüche, wobei der erste Beschleunigungsmesser (271) an einer ersten Statorplatte (281) montiert ist und der zweite Beschleunigungsmesser (273) an einer zweiten Statorplatte (283) montiert ist, wobei die Statorplatten den Stator hin zur Umgebung abgrenzen und insbesondere im Wesentlichen ringförmige flache Platten sind.

**6.** Verfahren nach einem der vorhergehenden Ansprüche, ferner umfassend:

Bestimmen eines Werts (247) eines Betriebspunkts des Generators (111) ;

Ableiten, basierend auf dem Schwingungssignal (243) und dem Wert (247) des Betriebspunkts, der Amplitude (251) und der Phase (253) des harmonischen Bezugsstroms (Iqref).

**7.** Verfahren nach dem vorhergehenden Anspruch, wobei der Wert (247) des Betriebspunkts basierend auf einem, insbesondere gemessenen, Grunddrehmoment (Tg) und einer, insbesondere gemessenen, Drehzahl (ωe) des Generators bestimmt wird.

**8.** Verfahren nach einem der vorhergehenden Ansprüche, wobei das Ableiten der Amplitude und der Phase des harmonischen Bezugsstroms umfasst:

Filtern des Schwingungssignals (343), dadurch Reduzieren von Anteilen des Schwingungssignals außer einer bestimmten Harmonischen, um ein gefiltertes Schwingungssignal (371) zu erhalten;

Nachschlagen einer Anfangsamplitude und einer Anfangsphase, die mit dem Wert des Betriebspunkts verknüpft sind, in einem Speicher;

Durchführen einer Optimierung der Amplitude und Phase basierend auf der Anfangsamplitude und der Anfangsphase, so dass das Schwingungssignal reduziert, insbesondere minimiert, wird; und

Speichern, verknüpft mit dem Wert des Betriebspunkts, der optimierten Amplitude und optimierten Phase in einem Speicher.

9. Verfahren nach einem der vorhergehenden Ansprüche, wobei das Injizieren des Stroms in den Generator umfasst:

Bestimmen einer harmonischen Bezugsspannung (Vdac, Vqac) basierend auf dem harmonischen Bezugsstrom (Iqref, Idref) und eines Iststroms (Id, Iq) in mindestens einer Statorwicklung,

wobei der harmonische Bezugsstrom und der Iststrom jeweils insbesondere durch Anteile in einem dq-Koordinatensystem dargestellt werden,

Bilden einer Summe (Vdref, Vqref) der harmonischen Bezugsspannung und einer Grundbezugsspannung; und

Liefern der Summe als Bezugsspannung an einen Steuerungseingang eines Konverters (119) mit Leistungseingangsanschlüssen, die mit Leistungsausgangsanschlüssen des Generators (111) verbunden sind.

10. Verfahren nach dem vorhergehenden Anspruch, ferner umfassend:

Bestimmen der Grundbezugsspannung (Vddc, Vqdc) basierend auf dem Iststrom (Id, Iq) in mindestens einer Statorwicklung des Generators und einem Grundbezugsstrom (Iddcref, Iqdcref).

11. Windenergieanlage (100), umfassend:

eine Welle (107) mit damit verbundenen Rotorblättern (105);

einen Generator (111), der mit der Welle mechanisch verbunden ist, wobei der Generator (411) einen Rotor (487) umfasst, der Permanentmagnete (488) aufweist, die daran in mindestens zwei Ringen (489a, ..., 489g) in unterschiedlichen axialen Positionen angeordnet montiert sind, die relativ zueinander in der Umfangsrichtung (z) versetzt sind; und

eine Anordnung (150, 250) zum Steuern des Generators (111), um eine harmonische Drehmomentwelligkeit zu reduzieren, wobei die Anordnung umfasst:

einen ersten Beschleunigungsmesser (271), der an einer ersten Position (a1) des Generators (311) montiert und ausgelegt ist,

einen ersten Wert (21, 240) einer Beschleunigung zu messen;

einen zweiten Beschleunigungsmesser (273), der an einer zweiten Position (a2) des Generators (311) montiert und ausgelegt ist,

einen zweiten Wert (23, 244) einer Beschleunigung zu messen;

einen Prozessor (242), der ausgelegt ist:

ein Schwingungssignal (243) basierend auf einer Kombination des ersten Werts (240) und des zweiten Werts (244) der Beschleunigung abzuleiten, und

basierend auf dem Schwingungssignal (243), eine Amplitude (251) und eine Phase (253) eines harmonischen Bezugsstroms (Iqref) abzuleiten; und

einen Treiber (257), der ausgelegt ist, einen Strom in den Generator (111) basierend auf dem harmonischen Bezugsstrom (Iqref) zu injizieren.

12. Windenergieanlage (100) nach dem vorhergehenden Anspruch, wobei der Treiber als ein Konverter ausgestaltet ist, der basierend auf dem harmonischen Bezugsstrom gesteuert wird.

**Revendications**

1. Procédé de commande d'un générateur (111) pour réduire une ondulation de couple harmonique, dans lequel le générateur (411) comprend un rotor (487) qui comporte des aimants permanents (488) qui sont montés dessus et agencés dans au moins deux bagues (489a, ..., 489g) en des positions axiales différentes qui sont décalées l'une par rapport à l'autre ou les unes par rapport aux autres dans la direction circonférentielle (z), le procédé comprenant :

la mesure d'une première valeur (240, 21) d'une accélération en utilisant un premier accéléromètre (271, 471) qui est monté en une première position (a1) du générateur (111) ;

la mesure d'une seconde valeur (244, 23) d'une accélération en utilisant un second accéléromètre (273, 473) qui est monté en une seconde position (a2) du générateur (111) ;

la dérivation d'un signal de vibration (243, 27) sur la base d'une combinaison de la première valeur (240, 21) et de la seconde valeur (244, 23) de l'accélération ;

la dérivation, sur la base du signal de vibration (243), d'une amplitude (251) et d'une phase (253) d'un courant harmonique de référence (Iqref) ; et

l'injection d'un courant à l'intérieur du générateur (111) sur la base du courant harmonique de référence (Iqref).

2. Procédé selon la revendication précédente, dans lequel le signal de vibration (243, 27) est basé sur une somme de la première valeur (240, 21) et de la seconde valeur (244, 23) de l'accélération.

3. Procédé selon l'une quelconque des revendications précédentes, dans lequel la première valeur (240, 21) de l'accélération et la seconde valeur (244, 23) de l'accélération se rapportent à une accélération dans une direction circonférentielle (z) du générateur (111, 311, 411).

4. Procédé selon l'une quelconque des revendications précédentes, dans lequel la première position et la seconde position comportent essentiellement une même position radiale (r1, r2) et essentiellement une même position circonférentielle (θ1, θ2) mais des positions axiales différentes (a1, a2), en particulier qui sont agencées selon une symétrie miroir.

5. Procédé selon l'une quelconque des revendications précédentes, dans lequel le premier accéléromètre (271) est monté au niveau d'une première plaque de stator (281) et le second accéléromètre (273) est monté au niveau d'une seconde plaque de stator (283), les plaques de stator délimitant le stator en direction de l'environnement et en particulier, étant essentiellement des plaques planes annulaires.

6. Procédé selon l'une quelconque des revendications précédentes, comprenant en outre :

la détermination d'une valeur (247) d'un point de fonctionnement du générateur (111) ; et
la dérivation, sur la base du signal de vibration (243) et de la valeur (247) du point de fonctionnement, de l'amplitude (251) et de la phase (253) du courant harmonique de référence (Iqref).

7. Procédé selon la revendication précédente, dans lequel la valeur (247) du point de fonctionnement est déterminée sur la base d'un couple fondamental (Tg), en particulier mesuré, et d'une vitesse de rotation (ωe), en particulier mesurée, du générateur.

8. Procédé selon l'une quelconque des revendications précédentes, dans lequel la dérivation de l'amplitude et de la phase du courant harmonique de référence comprend :

le filtrage du signal de vibration (343), d'où ainsi la réduction de composantes du signal de vibration autres qu'un harmonique particulier pour obtenir un signal de vibration filtré (371) ;
la recherche d'une amplitude initiale et d'une phase initiale qui sont associées à la valeur du point de fonctionnement au niveau d'un moyen de stockage ;
la réalisation d'une optimisation de l'amplitude et de la phase sur la base de l'amplitude initiale et de la phase initiale de telle sorte que le signal de vibration soit réduit, en particulier minimisé ; et
le stockage, en association avec la valeur du point de fonctionnement, de l'amplitude optimisée et de la phase optimisée dans un moyen de stockage.

9. Procédé selon l'une quelconque des revendications précédentes, dans lequel l'injection du courant à l'intérieur du générateur comprend :

la détermination d'une tension harmonique de référence (Vdac, Vqac) sur la base du courant harmonique de référence (Iqref, Idref) et d'un courant réel (Id, Iq) dans au moins un enroulement de stator, chaque courant parmi le courant harmonique de référence et le courant réel étant en particulier représenté par des composantes dans un système de coordonnées dq ;
la formation d'une somme (Vdref, Vqref) de la tension harmonique de référence et d'une tension fondamentale de référence ; et
l'application de la somme en tant que tension de référence sur une entrée de commande d'un convertisseur (119) qui comporte des bornes d'entrée de puissance qui sont connectées à des bornes de sortie de puissance du générateur (111).

10. Procédé selon la revendication précédente, comprenant en outre :
la détermination de la tension fondamentale de référence (Vddc, Vqdc) sur la base du courant réel (Id, Iq) dans au moins un enroulement de stator du générateur et d'un courant fondamental de référence (Iddcref, Iqdcref).

11. Éolienne (100), comprenant :

un arbre (107) sur lequel des pales de rotor (105) sont connectées ;

un générateur (111) qui est couplé mécaniquement à l'arbre, dans lequel le générateur (411) comprend un rotor (487) qui comporte des aimants permanents (488) qui sont montés dessus et agencés dans au moins deux bagues (489a, ..., 489g) en des positions axiales différentes qui sont décalées l'une par rapport à l'autre ou les unes par rapport aux autres dans la direction circonférentielle (z) ; et

un agencement (150, 250) pour commander le générateur (111) pour réduire une ondulation de couple harmonique, l'agencement comprenant :

un premier accéléromètre (271) qui est monté en une première position (a1) du générateur (311) et qui est adapté pour mesurer une première valeur (21, 240) d'une accélération ;

un second accéléromètre (273) qui est monté en une seconde position (a2) du générateur (311) et qui est adapté pour mesurer une seconde valeur (23, 244) d'une accélération ;

un processeur (242) qui est adapté :

pour dériver un signal de vibration (243) sur la base d'une combinaison de la première valeur (240) et de la seconde valeur (244) de l'accélération ; et

pour dériver, sur la base du signal de vibration (243), une amplitude (251) et une phase (253) d'un courant harmonique de référence (Iqref) ; et

un moyen de pilotage (257) qui est adapté pour injecter un courant à l'intérieur du générateur (111) sur la base du courant harmonique de référence (Iqref).

12. Éolienne (100) selon la revendication précédente, dans laquelle le moyen de pilotage est configuré en tant que convertisseur qui est commandé sur la base du courant harmonique de référence.

FIG 1

EP 3 454 469 B1

FIG 2

EP 3 454 469 B1

# FIG 3

FIG 4

FIG 5

FIG 6

## FIG 7

## FIG 8

FIG 9

FIG 10

EP 3 454 469 B1

## FIG 11

## FIG 12

**EP 3 454 469 B1**

**Patent documents cited in the description**

- US 9160260 B1

- EP 2552013 A1